(19) Europäisches Patentamt
European Patent Office
Office européen des brevets

(11) **EP 4 476 526 B1**

(12) # FASCICULE DE BREVET EUROPEEN

(45) Date de publication et mention de la délivrance du brevet:
**04.02.2026 Bulletin 2026/06**

(21) Numéro de dépôt: **23702618.2**

(22) Date de dépôt: **06.02.2023**

(51) Classification Internationale des Brevets (IPC):
***G01N 21/31*** *(2006.01)* ***G01N 21/33*** *(2006.01)*
***G01N 21/77*** *(2006.01)* ***G01N 21/80*** *(2006.01)*
***G01N 33/24*** *(2006.01)*

(52) Classification Coopérative des Brevets (CPC):
**G01N 21/77; G01N 21/272; G01N 21/31;**
G01N 21/05; G01N 21/274; G01N 21/33;
G01N 21/80; G01N 2021/7763; G01N 2021/7783;
G01N 2201/129

(86) Numéro de dépôt international:
**PCT/EP2023/052782**

(87) Numéro de publication internationale:
**WO 2023/152075 (17.08.2023 Gazette 2023/33)**

(54) **PROCEDE POUR LE SUIVI DANS LE TEMPS DE LA CONCENTRATION EN UN COMPOSE CHIMIQUE D'UN FLUIDE, AU MOYEN D'UN SYSTEME DE MESURE OPTIQUE**

VERFAHREN ZUR ÜBERWACHUNG DER ZEITLICHEN KONZENTRATION EINER CHEMISCHEN VERBINDUNG IN EINEM FLUID MITTELS EINES OPTISCHEN MESSSYSTEMS

METHOD FOR MONITORING THE CONCENTRATION OVER TIME OF A CHEMICAL COMPOUND IN A FLUID, BY MEANS OF AN OPTICAL MEASUREMENT SYSTEM

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité: **11.02.2022 FR 2201215**

(43) Date de publication de la demande:
**18.12.2024 Bulletin 2024/51**

(73) Titulaire: **IFP Energies nouvelles**
**92500 Rueil-Malmaison (FR)**

(72) Inventeurs:
- **DESCHAMPS, Herve**
  **92852 Rueil-Malmaison Cedex (FR)**
- **MASCLE, Matthieu**
  **92852 Rueil-Malmaison Cedex (FR)**
- **BOUJLEL YOUNSI, Jalila**
  **92852 Rueil-Malmaison Cedex (FR)**
- **YOUSSEF, Souhail**
  **92852 Rueil-Malmaison Cedex (FR)**

(74) Mandataire: **IFP Energies nouvelles**
**Département Propriété Industrielle**
**Rond Point de l'échangeur de Solaize**
**BP3**
**69360 Solaize (FR)**

(56) Documents cités:
**EP-A1- 2 657 681** **EP-A1- 3 139 151**
**WO-A1-2021/026284** **DE-A1- 102020 002 256**
**FR-A1- 2 705 459** **US-A1- 2001 006 819**
**US-A1- 2019 017 872**

- **MORVILLE J ET AL: "Two schemes for trace detection using cavity ringdown spectroscopy", APPLIED PHYSICS B, SPRINGER BERLIN HEIDELBERG, BERLIN/HEIDELBERG, vol. 78, no. 3, 5 December 2003 (2003-12-05), pages 465 - 476, XP036004646, ISSN: 0946-2171, [retrieved on 20040201], DOI: 10.1007/S00340-003-1363-8**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 4 476 526 B1

## Description

### Domaine technique

La présente invention concerne le domaine du suivi de l'évolution dans le temps d'une concentration en un composé chimique d'un fluide en circulation dans un milieu, au moyen d'une mesure d'absorbance en fonction de la longueur d'onde.

Par exemple, dans le domaine des géosciences (géothermie, stockage de CO2, récupération assistée de pétrole,...), des mesures en laboratoire sont souvent réalisées pour doser un composé chimique présent dans un fluide en circulation dans un échantillon de roche, afin d'identifier les éventuelles interactions / échanges qui ont eu lieu entre le fluide et le milieu poreux. De telles études visent à étudier et à comprendre les phénomènes physiques et géochimiques impliqués dans la roche.

Jusqu'à récemment, les dosages (de sels, tensioactifs, minéraux, huiles, polymères,...) sont réalisés en collectant les effluents dans des tubes (à l'aide des collecteurs de fractions) qui sont ensuite analysés manuellement et de manière différée dans le temps. Cette méthode présente plusieurs inconvénients :

- Analyse chronophage en termes de temps (mesure manuelle) ;
- Risque de vieillissement / altération des solutions avant dosage ;
- Mesures moyennées sur des gros volumes d'échantillons souvent exigés par la technique de mesure ;
- Résultat de mesure différé, ne pouvant pas permettre l'adaptation en temps réel de l'expérience de mesure si besoin ;
- Faible fréquence de mesure.

Le suivi d'une concentration en un composé chimique est de plus en plus réalisé au moyen de spectromètres équipés de cellules adaptées à la mesure en ligne (c'est-à-dire en continu, ou encore en temps réel) et pouvant couvrir différents types d'analyse (dosage, suivi de cinétique de réaction, turbidité, ...) de solutions d'intérêt pour les thématiques des géosciences (par exemple, interaction des sels, minéraux, tensioactifs, et/ou polymères avec la roche).

En particulier, la spectroscopie ultraviolet-visible (appelée souvent spectroscopie UV-VIS) fait partie des méthodes les plus utilisées pour la caractérisation des fluides et le dosage des espèces chimiques présentes. La spectrométrie UV-Vis est une technique de spectroscopie mettant en jeu les photons dont les longueurs d'ondes sont dans le domaine des ultraviolets (200 nm - 400 nm) et du visible (400 nm - 800nm). Soumises à un rayonnement dans cette gamme de longueurs d'onde, les molécules absorbantes subissent une transition électronique.

La mesure de l'absorbance (ou densité optique) due à cette transition pour chaque longueur d'onde permet d'obtenir le spectre UV-Vis de la solution qui se définit comme la variation de l'absorbance en fonction des différentes longueurs d'onde.

L'analyse de ce spectre d'absorption permet d'accéder à des informations qualitatives, en détectant la présence de certaines substances mais surtout quantitatives en déterminant la concentration des espèces absorbantes.

### Technique antérieure

Le document suivant sera cité au cours de la description :

Malik, M., Chan, K. H., & Azimi, G. (2021). Quantification of nickel, cobalt, and manganese concentration using ultraviolet-visible spectroscopy. RSC Advances, 11(45), 28014-28028.

Parmi les méthodes d'analyse quantitatives, on connait des méthodes basées sur la loi de Beer-Lambert. La loi de Beer-Lambert est une relation empirique qui établit que, à une longueur d'onde $\lambda$ donnée, l'absorbance $A_\lambda$ d'une solution est proportionnelle à la concentration *c* des espèces absorbantes, ainsi qu'à la longueur du trajet ou chemin optique d (distance sur la laquelle la lumière traverse l'échantillon). Plus précisément, pour une solution limpide contenant une seule espèce absorbante cette loi s'écrit :

$$A_\lambda = \varepsilon_\lambda . d . c \quad (1)$$

où $\varepsilon_\lambda$ est le coefficient d'extinction pour la longueur d'onde considérée.

Au moyen de cette loi, la détermination de la concentration se fait soit directement en connaissant le coefficient d'extinction ou via un étalonnage préalable avec un étalon de concentration connue.

Le spectre d'une solution contenant une seule espèce qui absorbe dans la gamme de longueur d'onde considérée présente une absorbance maximale $A_{max}$ à une longueur d'onde maximale $\lambda_{max}$. Le couple ($\lambda_{max}$ ; $A_{max}$) caractérise l'espèce chimique absorbante. Classiquement, pour ce type de solutions mono-composants (c'est-à-dire ne comprenant qu'un seul composé chimique qui répond dans l'UV-Vis), pour déterminer la concentration d'un composé donné, la longueur d'onde choisie est la longueur d'onde $\lambda max$ du pic $A_{max}$ du spectre d'absorption (cf. par exemple le document Malik et al., 2021). Ce choix permet certes de minimiser l'incertitude sur l'absorbance, mais en raison de la loi logarithmique reliant l'absorbance à l'intensité lumineuse, des lumières parasites et d'autres phénomènes de diffusion et de fluorescence, il limite considérablement la dynamique de la mesure (gamme de concentrations mesurable). Par ailleurs, un phénomène de saturation est observé au-delà d'une concentration critique dont la valeur dépend du composé à analyser. Plus précisément, au-delà d'une concentration critique, l'absorbance n'évolue plus d'une manière linéaire par rapport à la concentration et tend vers une même valeur maximale quelle que soit la concentration en place, rendant impossible de différencier les concentrations des solutions dont les concentrations excèdent cette valeur critique. Autrement dit, au-delà d'une concentration critique, l'absorbance sature et devient indépendante de la concentration.

Ainsi, l'utilisation de cette méthode d'analyse basée sur la loi de Beer-Lambert est classiquement restreinte aux solutions de faibles concentrations, ce qui est très limitant. Pour les fortes concentrations, on peut réaliser au préalable une dilution, mais cette étape, bien qu'elle reste envisageable pour des mesures ponctuelles, alourdit de manière considérable la procédure de mesure lorsqu'il s'agit d'un dosage en ligne où des milliers de mesures sont à réaliser sur des concentrations souvent inconnues. A cela s'ajoute le fait que la dilution est une source d'erreur supplémentaire sur la mesure.

Ainsi, cette méthode d'analyse basée sur la loi de Beer-Lambert est limitée aux solutions monocomposants très diluées, lorsqu'elles sont utilisées en ligne, pour deux raisons :

- dynamique de mesure (gamme de concentration) réduite en raison de la loi logarithmique.
- besoin d'automatisation du traitement des données pour l'analyse en ligne. En effet des centaines voire des milliers de spectres sont souvent à analyser. Les documents DE102020002256 A1, WO2021/026284A1, FR2705459 A1, US2019/017872A1, EP2657681A1, EP3139151A1, US2001/006819A1 et la publication MORVILLE J ET AL: "Two schemes for trace detection using cavity ringdown spectroscopy", APPLIED PHYSICS B, SPRINGER BERLIN HEIDELBERG, BERLIN/HEIDELBERG, vol. 78, no. 3, 1 février 2004, pages 465-476, ISSN: 0946-2171, DOI: 10.1007/S00340-003-1363-8 présentent différentes méthodes visant à augmenter l'étendue des concentrations déterminées par des mesures d'absorption optique d'un composé chimique.

La présente invention permet de pallier ces inconvénients avec une méthode alternative. Notamment, la présente invention concerne un procédé pour suivre dans le temps l'évolution d'une concentration en un composé chimique d'un fluide, au moyen d'un système de mesure optique. Plus précisément, la présente invention concerne une méthode d'analyse de spectres d'absorption valide sur une large gamme de concentrations, tout en permettant une application en temps réel. En particulier, la présente invention ne nécessite pas d'avoir recours à une dilution, mais permet malgré tout un élargissement important de la gamme de mesure, sans compromettre la précision de la mesure.

**Résumé de l'invention**

La présente invention concerne un procédé pour déterminer une évolution dans le temps d'une concentration en un composé chimique d'un fluide en circulation dans une zone de mesure, au moyen au moins d'un système de mesure optique pour mesurer une absorbance en fonction d'une longueur d'onde, ledit composé chimique dudit fluide étant l'unique composé chimique dudit fluide ou l'unique composé chimique dudit fluide dont ladite concentration varie ou l'unique composé chimique dudit fluide ayant une absorbance non nulle dans une gamme de longueur d'ondes absorbées par ledit composé chimique. Ledit procédé est caractérisé en que :

A) on construit un modèle de l'évolution de ladite absorbance en fonction de ladite concentration de la manière suivante :

i) au moyen dudit système de mesure optique, on mesure une absorbance en fonction de la longueur d'onde pour une pluralité d'échantillons dudit fluide ayant des concentrations en ledit composé chimique distinctes, et on obtient une première pluralité de spectres d'absorption relatifs audit composé chimique correspondant chacun à une desdites concentrations en ledit composé chimique ;

ii) on définit une courbe intersectant chacun desdits spectres d'absorption de ladite première pluralité de spectres d'absorption en un seul point d'intersection et telle que ladite courbe soit une fonction bijective de ladite absorbance et de ladite longueur d'onde ;

iii) on construit ledit modèle de l'évolution de ladite absorbance en fonction de ladite concentration à partir de premières valeurs d'absorbance auxdits points d'intersection entre ladite courbe et chacun desdits spectres d'absorption de ladite première pluralité de spectres d'absorption, et de ladite concentration correspondant à chacun desdits spectres d'absorption de ladite première pluralité de spectres d'absorption ;

B) on détermine une évolution dans le temps d'une concentration en ledit composé chimique dudit fluide circulant dans ladite zone de mesure de la manière suivante :

iv) au moins au moyen dudit système de mesure optique, on mesure dans ladite zone de mesure une absorbance en fonction de la longueur d'onde pour une succession de pas de temps et on obtient une deuxième pluralité de spectres d'absorption relatifs audit composé chimique correspondant chacun à un pas de temps ;

v) pour chacun desdits spectres d'absorption de ladite deuxième pluralité de spectres d'absorption, on détermine une deuxième valeur d'absorbance à l'intersection entre ladite courbe et ledit spectre d'absorption, et, au moyen dudit modèle de l'évolution de ladite absorbance en fonction de ladite concentration et à partir de ladite deuxième valeur d'absorbance, on déduit ladite concentration en ledit composé chimique pour ledit pas de temps.

Selon une mise en œuvre de l'invention, ladite courbe peut être une droite.

Selon une mise en œuvre de l'invention, on peut déterminer le modèle de l'évolution de l'absorbance en fonction de la concentration au moyen d'une méthode de régression.

Selon une mise en œuvre de l'invention, ledit système de mesure optique peut comprendre au moins une source lumineuse pour émettre un rayonnement dans au moins dans une gamme de longueur d'ondes prédéterminée, et un spectromètre pour mesurer une intensité lumineuse dudit rayonnement transmis au travers de ladite zone de mesure au moins dans ladite gamme de longueur d'ondes prédéfinie.

Selon une mise en œuvre de l'invention, lorsque ledit composé chimique est l'unique composé chimique dudit fluide dont ladite concentration varie et en l'absence d'une étape de calibration dudit système de mesure optique au moyen d'un fluide de référence correspondant audit fluide à l'exclusion dudit composé chimique, on peut appliquer une étape de prétraitement aux mesures d'absorbance en fonction de la longueur d'onde pour déterminer un spectre d'absorption dudit composé chimique, comprenant au moins une soustraction dudit spectre d'absorption dudit composé chimique additionnel préalablement enregistré.

Selon une mise en œuvre de l'invention, ladite zone de mesure peut être disposée en aval d'un milieu poreux, tel qu'un échantillon d'une roche d'une formation souterraine, dans lequel circule ledit fluide.

Selon une mise en œuvre de l'invention, ledit composé chimique peut être choisi parmi la liste suivante : un tensio-actif, un sel, un composé hydrocarboné, un polymère.

Selon une mise en œuvre de l'invention, ledit procédé peut être mis en œuvre au moyen en outre d'un système de circulation de fluide pour faire circuler ledit fluide au moins dans ledit milieu poreux et ladite zone de mesure, ledit système de circulation de fluide comprenant une pompe, de préférence une pompe apte à délivrer un débit avec une haute précision, et une cellule porte échantillon dans laquelle est disposé ledit milieu poreux.

L'invention concerne en outre un système pour déterminer une évolution dans le temps d'une concentration en un composé chimique d'un fluide, ledit système comprenant une source lumineuse, un spectromètre, et des moyens pour le traitement et l'analyse de mesures réalisées par ledit spectromètre, pour mettre en œuvre le procédé tel que décrit ci-dessus.

En outre, l'invention concerne un produit programme d'ordinateur téléchargeable depuis un réseau de communication et/ou enregistré sur un support lisible par ordinateur et/ou exécutable par un processeur, comprenant des instructions de code de programme pour la mise en œuvre des étapes ii) et/ou iii) et/ou v) du procédé tel que décrit ci-dessus, lorsque ledit programme est exécuté sur un ordinateur.

D'autres caractéristiques et avantages du procédé selon l'invention, apparaîtront à la lecture de la description ci-après d'exemples non limitatifs de réalisations, en se référant aux figures annexées et décrites ci-après.

**Liste des figures**

La figure 1 présente de manière schématique un mode de réalisation du système de mesure optique selon l'invention.

La figure 2A présente un mode de réalisation d'un système de mesure optique et de moyens de circulation aptes à la mise en œuvre du procédé selon sa variante principale.

La figure 2B présente un autre mode de réalisation d'un système de mesure optique et de moyens de circulation aptes à la mise en œuvre du procédé selon sa variante principale.

La figure 2C présente un mode de réalisation d'une cellule de mesure pouvant être utilisée pour les modes de réalisation de la figure 2A ou de la figure 2B,

La figure 3 illustre une pluralité de spectres d'absorption mesurés lors de l'étape 1.1) du procédé selon l'invention décrite ci-après, appliquée à un premier exemple d'application.

La figure 4 illustre un modèle de l'évolution de l'absorbance en fonction de la concentration issu de l'étape 1.3) du procédé selon l'invention décrite ci-après, appliquée au premier exemple d'application de la figure 3.

La figure 5 illustre une pluralité de spectres d'absorption mesurés lors de l'étape 2.1) du procédé selon l'invention décrite ci-après, appliquée au premier exemple d'application de la figure 3.

La figure 6 illustre une courbe représentant l'évolution dans le temps de la concentration en un composé chimique, issue de l'étape 2.2) du procédé selon l'invention décrite ci-après, appliquée au premier exemple d'application de la figure 3.

La figure 7 illustre une pluralité de spectres d'absorption mesurés lors de l'étape 1.1) du procédé selon l'invention décrite ci-après, appliquée à un deuxième exemple d'application.

La figure 8 illustre une pluralité de valeurs d'absorbance en fonction de la concentration, obtenues par l'application d'une méthode selon l'art antérieur au deuxième exemple d'application de la figure 7.

La figure 9 illustre un modèle de l'évolution de l'absorbance en fonction de la concentration issu de l'étape 1.3) du procédé selon l'invention décrite ci-après, appliquée au deuxième exemple d'application de la figure 7.

## Description des modes de réalisation

L'invention concerne un procédé pour mesurer une évolution dans le temps d'une concentration en un composé chimique d'un fluide circulant dans une zone de mesure, au moyen au moins d'un système de mesure optique pour mesurer une absorbance en fonction de la longueur d'onde.

Selon une variante principale de l'invention pouvant trouver son application dans le domaine des géosciences, la zone de mesure peut être située en aval d'un échantillon d'un milieu poreux dans lequel on fait circuler le fluide comportant le composé chimique d'intérêt. En particulier, l'échantillon de milieu poreux peut être un échantillon d'une roche d'une formation souterraine, par exemple prélevé par carottage. Le procédé selon l'invention peut alors avoir pour objectif de suivre l'évolution de la concentration en le composé chimique d'intérêt en sortie de l'échantillon de milieu poreux dans lequel on injecte une solution comprenant le composé chimique selon une concentration connue, afin de comprendre les interactions fluide/roche. Selon une mise en œuvre, le procédé peut être utilisé pour suivre l'évolution dans le temps d'une réaction chimique, en suivant l'évolution de la concentration d'un composé chimique d'une solution suite à l'ajout d'un réactif en amont de la zone de mesure. Une application particulière peut être la détermination du pH d'une solution qui ne répond pas dans l'UV, en utilisant un réactif spécifique répondant dans l'UV.

Selon une alternative, la zone de mesure peut être aussi une portion de l'air ambiant d'un espace confiné ou semi-confiné de manière à suivre l'évolution d'une concentration en polluant. Il est bien clair que ces espaces confiné ou semi-confiné doivent être contrôlés en température.

Selon l'invention, le composé chimique dont on cherche à suivre l'évolution de la concentration dans le temps dans le fluide d'intérêt est soit :

- l'unique composé chimique du fluide d'intérêt : autrement dit, le fluide considéré ne comprend qu'un unique composé chimique (on parle alors de fluide mono-composant) ; ou
- l'unique composé chimique du fluide d'intérêt ayant une absorbance non (sensiblement) nulle dans la gamme de longueur d'ondes absorbées par le composé chimique considéré : autrement dit, le fluide considéré peut comprendre plusieurs composés chimiques (on parle alors de fluide multi-composants), mais tels que le spectre d'absorption du composé chimique d'intérêt soit dissocié des spectres d'absorption des autres composés chimiques (on parlera par la suite de composés chimiques additionnels). Par « sensiblement », on entend « au moins à l'erreur de mesure près ». Par « gamme de longueur d'ondes absorbées par le composé chimique », on entend la gamme de longueurs d'onde pour laquelle l'absorbance du composé chimique est non nulle. Autrement dit, pour cette alternative, les spectres d'absorption des composés chimiques additionnels présentent des valeurs d'absorbance (sensiblement) nulles pour les valeurs de longueurs d'onde pour lesquelles le spectre d'absorption du composé chimique d'intérêt présente des valeurs d'absorbance non (sensiblement) nulles ; ou
- l'unique composé chimique du fluide d'intérêt dont la concentration varie : autrement dit, là encore, le fluide considéré peut comprendre plusieurs composés chimiques, et les spectres d'absorption de ces composés chimiques additionnels peuvent se superposer au moins en partie au spectre d'absorption du composé chimique d'intérêt, mais leur concentration est invariante dans le temps.

Dans les deux premières alternatives décrites ci-dessus (fluide mono-composant et fluide multi-composants avec spectres d'absorption dissociés), aucun prétraitement du spectre d'absorption mesuré n'est nécessaire puisque le spectre d'absorption du composé chimique d'intérêt est directement accessible.

Dans la troisième alternative (fluide multi-composants avec spectres d'absorption pouvant se superposer, et tel que la concentration des composés additionnels est invariante dans le temps), on peut appliquer une étape de prétraitement au spectre d'absorption mesuré, telle qu'elle sera décrite ci-après, de manière à dissocier le spectre d'absorption du composé chimique d'intérêt du spectre d'absorption mesuré. En effet, le spectre d'absorption mesuré dans le cas d'un fluide multi-composants correspond à la somme des spectres d'absorption de l'ensemble des composés chimiques du fluide, selon la loi d'additivité des absorbances.

Selon une mise en œuvre de la variante principale de l'invention, le composé chimique d'intérêt peut être choisi parmi la liste suivante : un tensio-actif, un sel, un composé hydrocarboné, un polymère. Il s'agit en effet de composés chimiques d'intérêt en géosciences, notamment en géothermie, pour le stockage de $CO_2$, ou encore pour la récupération assistée de pétrole. Ces composés chimiques font souvent partie de fluides injectés dans une formation souterraine, que ce soit pour les stocker ($CO_2$, gaz naturel, etc.), ou bien en tant que fluide de balayage pour récupérer une ressource énergétique (hydrocarbures, chaleur, etc.) présente dans la formation souterraine poreuse. La connaissance de l'évolution dans le temps de la concentration en ces composés chimiques permet d'identifier les éventuelles interactions / échanges qui ont eu lieu entre le fluide injecté et le milieu poreux.

Selon une mise en œuvre de l'invention, le système de mesure optique peut comprendre :

- une source lumineuse pour émettre un rayonnement au moins dans une gamme de longueurs d'onde d'intérêt pour le composé chimique d'intérêt. Par gamme de longueurs d'onde d'intérêt, on entend une gamme de longueurs d'onde dans laquelle le spectre d'absorption caractéristique du composé chimique d'intérêt a des valeurs d'absorbance non nulles. Selon une mise en œuvre de la variante principale de l'invention selon laquelle le composé chimique d'intérêt est un tensio-actif, un sel, un composé hydrocarboné, ou un polymère, la gamme de longueurs d'onde de la source lumineuse peut être la gamme de longueurs d'onde des ultra-violets (notés UV), et
- un spectromètre pour mesurer une intensité lumineuse en fonction de la longueur d'onde dans au moins la gamme de longueurs d'onde d'intérêt pour le composé chimique d'intérêt.

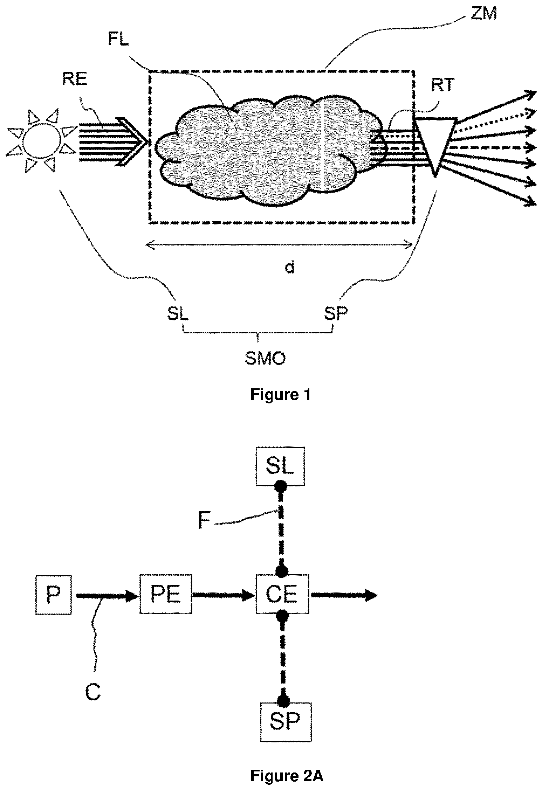

La figure 1 présente de manière schématique un mode de réalisation du système de mesure optique SMO selon l'invention, comprenant une source lumineuse SL pour émettre un rayonnement RE, dans une zone de mesure ZM comprenant un fluide FL, et un spectromètre SP pour mesurer l'absorbance en fonction de la longueur d'onde du rayonnement RT ayant traversé le fluide FL dans la zone de mesure ZM selon un chemin optique de longueur d.

Selon un exemple de mise en œuvre de l'invention, la source lumineuse peut être une source halogène-deutérium, tel que le modèle AvaLight-DH-S-BAL de la société Avantes (Pays-Bas) et/ou le spectromètre peut être un spectromètre fibré haute sensibilité, tel que le modèle AvaSpec-HS2048XL-EVO de la société Avantes (Pays-Bas).

Avantageusement, le système de mesure optique peut comprendre une cellule de mesure reliée en amont à la source lumineuse et en aval (les directions amont et aval étant considérées par rapport au rayonnement émis par la source lumineuse) au spectromètre, et dans laquelle se trouve le fluide dont on souhaite mesurer une absorbance en fonction de la longueur d'onde. Selon une mise en œuvre, la cellule de mesure peut comporter deux entrées et deux sorties, pour permettre la liaison avec la source lumineuse et le spectromètre, mais aussi avec un système de circulation de fluide décrits ci-après.

Avantageusement, le système de mesure optique peut comprendre des moyens pour le traitement et l'analyse de l'intensité lumineuse mesurée par le spectromètre, afin de déterminer un spectre d'absorption à partir de l'intensité lumineuse mesurée. Selon un exemple de mise en œuvre, les moyens pour le traitement et l'analyse de l'intensité lumineuse mesurée par le spectromètre peuvent comprendre un ordinateur sur lequel est installé le logiciel Avasoft de la société Avantes (Pays-Bas) pour déterminer les spectres d'absorption à partir de l'intensité lumineuse mesurée. Avantageusement, le système de mesure optique peut comprendre des fibres optiques de 400 $\mu$m de cœur pour relier la source lumineuse à la cellule de mesure, et la cellule de mesure au spectromètre. Avantageusement, le système de mesure optique peut comprendre en outre des moyens pour la transmission (par exemple par voie filaire électrique, par fibre optique ou par un système de communication sans fil) des mesures réalisées par le spectromètre aux moyens pour le traitement et l'analyse de l'intensité lumineuse.

Selon une mise en œuvre de l'invention, le procédé peut comprendre une étape, éventuellement préalable, de calibration du système de mesure optique. Une telle étape de calibration peut comprendre une mesure d'une intensité lumineuse en fonction de la longueur d'onde transmise au travers d'un fluide de référence. Selon une mise en œuvre selon laquelle le fluide d'intérêt est un liquide mono-composant, on peut utiliser de l'eau purifiée en tant que fluide de référence. Selon les alternatives selon laquelle le fluide d'intérêt comporte, en plus du composé chimique d'intérêt, des composés chimiques additionnels tels que définis ci-dessus, le fluide de référence peut ne contenir que les éléments chimiques additionnels, présents selon leurs concentrations respectives dans le fluide d'intérêt. Selon une réalisation de cette mise en œuvre de l'invention, l'étape de calibration peut comprendre les étapes suivantes :

- l'émission par la source lumineuse d'un rayonnement à travers le fluide de référence au sein d'une zone de mesure ;
- la détection par le spectromètre du rayonnement ayant traversé le fluide de référence dans la zone de mesure et la génération d'une intensité lumineuse en fonction de la longueur d'onde du rayonnement ayant traversé le fluide de référence.

A partir de cette calibration, l'absorbance A d'un fluide peut être déterminée selon une formule du type :

$$A(\lambda) = -\ln\left(\frac{I_S(\lambda)}{I_0(\lambda)}\right) \text{ (2)},$$

où $\lambda$ est la longueur d'onde, $I_s(\lambda)$ est l'intensité lumineuse en fonction de la longueur d'onde du rayonnement transmis au travers du fluide considéré, et $I_0(\lambda)$ est l'intensité lumineuse en fonction de la longueur d'onde du rayonnement transmis au travers du fluide de référence.

Selon une mise en œuvre au moins de la variante principale de l'invention, le procédé peut être mis en œuvre en outre au moyen d'un système de circulation de fluide comprenant :

- une pompe, de préférence une pompe apte à délivrer un débit avec une haute précision (comme par exemple une pompe pour chromatographie liquide de haute performance, dites pompes HPLC), de préférence pouvant délivrer un débit dans la gamme 0 - 2 ml/min ;
- une cellule porte échantillon, dans laquelle est placé le milieu poreux.

Avantageusement, le système de circulation de fluide dans le milieu poreux peut comprendre en outre :

- un débitmètre pour contrôler le débit de la pompe ; et/ou
- un capteur de pression différentielle permettant de mesurer la perte de charge le long du milieu poreux ; et/ou
- des moyens de connexion et de contrôle du fluide, tels que des vannes, des conduites ; et/ou
- une sonde de température ; et/ou
- un by-pass, par exemple sous la forme d'une conduite, permettant de contourner le milieu poreux ; et/ou
- des moyens pour le traitement et l'analyse des mesures de débit, et/ou de pression et/ou de température. Avantageusement, les moyens pour le traitement et l'analyse des mesures de débit et/ou de pression et/ou de température sont les mêmes que les moyens pour le traitement et l'analyse des mesures de l'intensité lumineuse réalisées au moyen d'un quelconque mode de réalisation du système optique.

La figure 2A présente un mode de réalisation d'un système de mesure optique et de moyens de circulation aptes à la mise en œuvre du procédé selon sa variante principale, comprenant une pompe P pour faire circuler, via des conduites C représentées par des flèches, le fluide d'intérêt dans un échantillon de roche (non représenté) disposé dans un porte échantillon PE, puis dans une cellule de mesure CE, qui est elle-même reliée, via des fibres optiques F, à une source lumineuse SL et un spectromètre SP. Une telle cellule de mesure CE permet une mesure optique dans une zone de mesure dans laquelle circule un fluide.

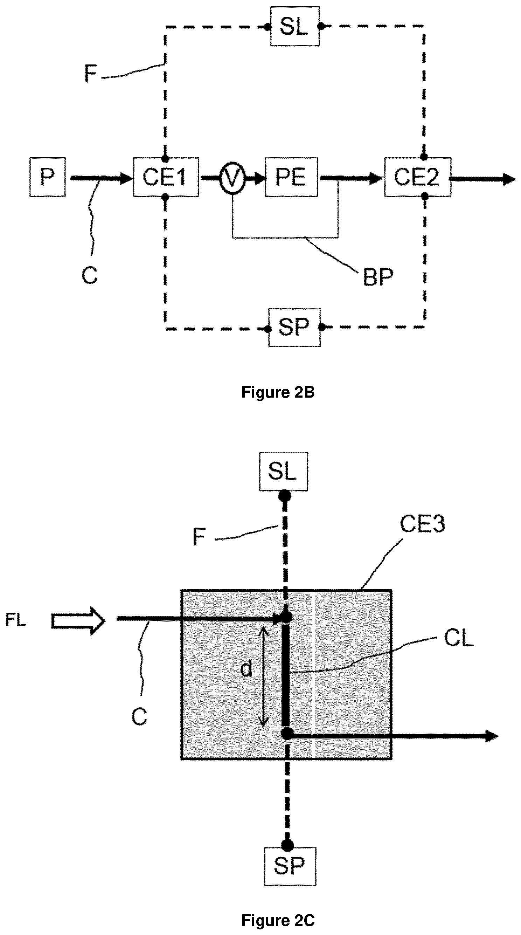

La figure 2B présente un autre mode de réalisation d'un système de mesure optique et de moyens de circulation aptes à la mise en œuvre du procédé selon sa variante principale, se distinguant du mode de réalisation de la figure 2A en ce qu'il comprend deux cellules de mesures CE1, CE2 : une cellule de mesure CE1 disposée en amont de l'échantillon de roche (non représenté) disposé dans le porte-échantillon PE et une autre cellule de mesure CE2 disposée en aval de l'échantillon de roche. La cellule de mesure CE1 disposée en amont de l'échantillon a pour seul but de vérifier la stabilité de la solution injectée dans l'échantillon de roche, alors que la cellule de mesure CE2 disposée en sortie de l'échantillon de roche a pour but de doser les effluents en sortie du milieu. Les cellules de mesure CE1, CE2 sont reliées chacune à la source lumineuse SL et au spectromètre SP par des fibres optiques F. Le système de circulation de fluide comprend une pompe P en amont de la cellule de mesure amont CE1, des conduites C pour relier la pompe P à la cellule de mesure amont CE1, la cellule de mesure amont CE1 à l'échantillon disposé dans le porte-échantillon PE, et l'échantillon à la cellule de mesure aval CE2. Le système de circulation de fluide comprend en outre un by-pass BP pour contourner l'échantillon de roche, contrôlé par une vanne V. Le by-pass BP est notamment utile pour réaliser l'application de l'étape 1.1) décrite ci-dessous pour chacune des deux cellules de mesure CE1, CE2, au moyen d'une unique injection d'un échantillon de fluide.

La figure 2C présente un mode de réalisation d'une cellule de mesure CE3, par exemple pouvant être utilisée pour les modes de réalisation de la figure 2A ou de la figure 2B, comprenant un canal CL de longueur d connecté aux conduites C dans lesquelles circulent le fluide FL, ainsi qu'à un spectromètre SP et à une source lumineuse via des fibres optiques F. Ce type de cellule de mesure CE3 permet de réaliser une mesure de l'absorbance en fonction de la longueur d'onde relative au fluide FL circulant dans le canal CL. Selon le mode de réalisation illustré, le canal CL est sensiblement perpendiculaires aux conduites C. Avantageusement, on peut ajuster la longueur d du canal, en fonction de la gamme de concentrations à mesurer. En effet, cette longueur constitue la longueur du chemin optique dont dépend l'absorbance (cf. équation (1) ci-dessous) : plus le chemin optique est long, et plus on peut avoir accès à des faibles concentrations.

Le procédé selon l'invention comprend au moins les étapes suivantes décrites ci-après.

### 1) Construction d'un modèle de l'évolution de l'absorbance en fonction de la concentration

Il s'agit ici de construire un modèle de l'évolution de l'absorbance en fonction de la concentration, à partir d'une pluralité d'échantillons de fluide à concentrations connues en le composé chimique d'intérêt. Autrement dit, il s'agit ici de calibrer un modèle de l'évolution de l'absorbance en fonction de la concentration.

### 1.1) Acquisition d'une pluralité de spectres d'absorption pour une pluralité de concentrations en le composé chimique d'intérêt

Au cours de cette étape, au moyen du système de mesure optique, on mesure une absorbance en fonction de la longueur d'onde pour une pluralité d'échantillons du fluide, les échantillons ayant des concentrations en le composé chimique d'intérêt distinctes, et on obtient une première pluralité de spectres d'absorption correspondant chacun à une des concentrations en le composé chimique d'intérêt. Autrement dit, cette étape vise à déterminer un spectre d'absorption (c'est-à-dire une courbe représentant l'évolution de l'absorbance en fonction de la longueur d'onde) pour chaque échantillon de fluide ayant une concentration en le composé chimique d'intérêt distincte d'un autre échantillon de la pluralité d'échantillons. Il est bien clair que la concentration en composé chimique de chaque échantillon est connue.

Avantageusement, le nombre d'échantillons de fluide ayant des concentrations en le composé chimique distinctes vaut au moins 5, et vaut de préférence 10, très préférentiellement 15. Il est bien clair que la gamme de concentrations couverte par les échantillons peut être choisie en fonction des concentrations attendues lors de la mise en œuvre de l'étape 2). Par exemple dans le cas de la variante principale de l'invention, il est classique de vouloir suivre l'évolution dans le temps de la concentration en sortie d'un milieu poreux d'une solution de concentration en un composé chimique connue, injectée en entrée du milieu poreux. Ainsi, la gamme de concentrations couverte par les échantillons de fluide peut avantageusement varier entre une concentration nulle et la concentration de la solution qui sera en entrée du milieu poreux, de préférence entre une concentration nulle et une valeur maximale supérieure (par exemple de 50%) à la concentration de la solution en entrée du milieu poreux, pour être à même de mesurer des concentrations en sortie du milieu poreux excédant la concentration en entrée en raison d'un phénomène de rétention temporaire (par adsorption) dans le milieu poreux.

Selon les alternatives selon lesquelles le fluide considéré est un fluide mono-composant ou bien un fluide multi-composants avec des spectres dissociés tels que décrits ci-dessus, les courbes d'absorbance en fonction de la longueur d'onde mesurées correspondent directement aux spectres d'absorption du composé chimique d'intérêt.

Selon une mise en œuvre selon laquelle le fluide considéré comporte un ou des composés chimiques additionnels par rapport au composé chimique d'intérêt, dont les spectres d'absorption se superposent au moins en partie au spectre d'absorption du composé chimique d'intérêt et dont la concentration est connue et invariante dans le temps, on peut réaliser un prétraitement de la mesure de l'absorbance en fonction de la longueur d'onde afin d'obtenir le spectre d'absorption du composé chimique d'intérêt. Selon une réalisation de cette mise en œuvre de l'invention, on peut réaliser un prétraitement de la mesure de l'absorbance en fonction de la longueur d'onde de la manière suivante : pour chaque composé chimique additionnel, on mesure le spectre d'absorption d'un échantillon d'une solution comprenant ce composé chimique additionnel selon sa concentration connue dans le fluide d'intérêt, et on soustrait le spectre d'absorption de ce composé chimique additionnel au spectre d'absorption mesuré pour le fluide d'intérêt. A noter que, lorsqu'une étape de calibration préalable du système de mesure optique a été réalisée au moyen d'un fluide de référence formé des composés chimiques additionnels selon leurs concentrations respectives tel que décrit ci-dessus (c'est-à-dire pour un fluide de référence correspondant au fluide d'intérêt, à l'exclusion du composé chimique d'intérêt), il n'est pas nécessaire de réaliser un prétraitement de la mesure de l'absorbance en fonction de la longueur d'onde, puisque l'intensité lumineuse mesurée est de fait corrigée par l'intensité lumineuse du fluide de référence, selon la formule de l'équation (2).

Selon une mise en œuvre de la variante principale de l'invention, on peut mettre en œuvre l'étape 1.1) au moyen d'un système de mesure optique et d'un système de circulation de fluide tels que décrits dans la figure 2B, le système de circulation de fluide étant configuré tel que la vanne V permet de contourner le milieu poreux via le by-pass BP. De cette manière, on peut mesurer, avec un unique système de circulation de fluide, une absorbance en fonction de la longueur d'onde pour chaque échantillon de fluide et au niveau de chaque cellule de mesure CE1, CE2, afin construire un modèle de l'évolution de l'absorbance en fonction de la concentration pour chaque cellule de mesure CE1, CE2 tel que décrit ci-dessous.

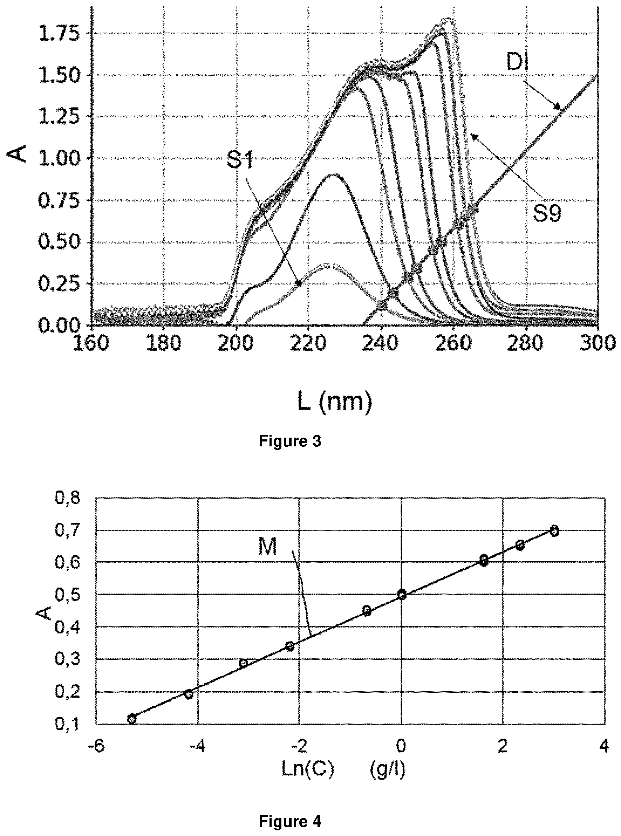

La figure 3 illustre une pluralité de spectres d'absorption issus de l'application de l'étape 1.1) à un exemple d'application qui sera décrit ci-après. En particulier, cette figure présente neuf courbes (seules les courbes S1 et S9 sont annotées pour des raisons de clarté) représentant l'évolution de l'absorbance A en fonction de la longueur d'onde L, chaque courbe résultant d'une mesure réalisée pour un fluide ayant une concentration en un composé chimique unique donnée. Sur cette figure, le spectre d'absorption S1 correspond à la concentration la plus faible et le spectre S9 correspond à la concentration la plus élevée.

**1.2) Définition d'une courbe de l'absorbance en fonction de la longueur d'onde**

Au cours de cette étape, on définit une courbe intersectant en une seul point chacun des spectres d'absorption de la pluralité de spectres d'absorption déterminés à l'étape 1.1) et telle que cette courbe soit une fonction bijective de l'absorbance et de la longueur d'onde (autrement dit, cette courbe est telle qu'à toute valeur d'absorbance ne corresponde qu'une seule valeur de longueur d'onde et réciproquement).

Autrement dit, on définit une courbe de l'absorbance en fonction de la longueur d'onde intersectant :

- l'ensemble des spectres d'absorption : cela permet de couvrir l'ensemble la gamme de concentrations prédéfinie ;
- en un seul point : cela permet de contribuer à l'unicité des valeurs de concentration déterminées lors de l'étape 2) décrite ci-dessous.
- et telle qu'à une valeur d'absorbance ne corresponde qu'une seule valeur de longueur d'onde et réciproquement : cela permet également de contribuer à l'unicité des valeurs de concentration déterminées lors de l'étape 2) décrite ci-dessous.

De manière très préférée, la courbe définie est une droite. Ce mode de mise en œuvre est avantageux, car il est alors très rapide de déterminer l'intersection de la droite avec chacun des spectres d'absorption, notamment plus rapide qu'avec une courbe représentée par une fonction plus complexe, comme par exemple une fonction polynômiale de degré au moins 2. Cela permet de contribuer à une détermination en temps réel de l'évolution de la concentration en un composé chimique dans un milieu lors de l'étape 2) décrite ci-dessous. Mais il est bien clair que toute autre courbe répondant aux critères ci-dessus peut être définie.

La figure 3 décrite ci-dessus présente un exemple de courbe, sous la forme d'une droite DI, répondant aux critères ci-dessus appliqués aux spectres d'absorption S1, S9 mesurés à l'étape 1.1). On peut notamment observer que la droite DI ainsi définie intersecte en un seul point l'ensemble des spectres d'absorption S1, S9, et dans des portions de ces spectres où une seule valeur d'absorbance est associée à une seule valeur de longueur d'onde, et réciproquement.

Aux fins de l'étape 1.3) décrite ci-après, on peut avantageusement collecter les valeurs d'absorbance à l'intersection entre la courbe ainsi définie à l'étape 1.2) et chacun des spectres d'absorption de la pluralité de spectres d'absorption déterminés à l'issue de l'étape 1.1).

**1.3) Construction d'un modèle de l'évolution de l'absorbance en fonction de la concentration**

Au cours de cette étape, on construit un modèle de l'évolution de l'absorbance en fonction de la concentration à partir des valeurs d'absorbance aux points d'intersection entre la courbe définie à l'étape 1.2) et les spectres d'absorption déterminés à l'étape 1.1), et à partir de la concentration correspondant à chacun de ces spectres d'absorption.

En effet, chaque spectre d'absorption déterminé à l'étape 1.1) correspond à une concentration connue en le composé chimique d'intérêt. Pour un spectre d'absorption, on peut alors associer à la valeur d'absorbance au point d'intersection entre ce spectre et la courbe de l'étape 1.2), la concentration associée à ce spectre. On obtient ainsi pour chaque spectre d'absorption un couple formé par une absorbance et une concentration.

Selon une mise en œuvre de l'invention, on construit le modèle de l'évolution de l'absorbance en fonction de la concentration en recherchant, par exemple par régression, de préférence par régression linéaire pour des raisons de rapidité de temps de calcul, une fonction permettant d'approcher au mieux les valeurs d'absorbance aux points d'intersection entre la courbe définie à l'étape 1.2) et les spectres d'absorption déterminés à l'étape 1.1), en fonction de leurs valeurs de concentration associées. Selon une mise en œuvre de l'invention, le modèle de l'évolution de l'absorbance en fonction de la concentration peut être une droite, ou tout autre polynôme.

La figure 4 présente un exemple de modèle M de l'évolution de l'absorbance A en fonction de la concentration C (en échelle logarithmique), déterminé par régression à partir des couples (représentés par des points sur cette figure) formés par une valeur d'absorbance et une valeur de concentration.

**2) Détermination de l'évolution dans le temps de la concentration en le composé chimique**

Le modèle de l'évolution de l'absorbance en fonction de la concentration ayant été déterminé à l'issue de l'étape précédente, ce modèle peut être utilisé pour déterminer une évolution dans le temps de la concentration en le composé chimique d'intérêt du fluide circulant dans une zone de mesure.

**2.1) Acquisition de spectres d'absorption pour une succession de pas de temps**

Au moins au moyen du système de mesure optique tel que décrit ci-dessus, on mesure dans la zone de mesure (dans laquelle circule le fluide comprenant lui-même le composé chimique d'intérêt) une absorbance en fonction de la longueur d'onde pour une succession de pas de temps et on obtient une deuxième pluralité de spectres d'absorption relatifs audit composé chimique correspondant chacun à un pas de temps.

Autrement dit au cours de cette étape, on mesure au cours du temps une absorbance en fonction de la longueur d'onde dans la zone de mesure comprenant le fluide comportant le composé chimique d'intérêt.

Selon une mise en œuvre de la variante principale de l'invention, on peut réaliser une mesure de l'absorbance en fonction de la longueur d'onde dans une zone de mesure en aval de l'échantillon de milieu poreux toutes les dix secondes, de préférence toutes les secondes. De tels pas de temps permettent un suivi en continu (ou encore en ligne, ou encore en temps réel) de l'évolution de la concentration en un composé chimique d'un fluide circulant dans un milieu poreux.

Selon une mise en œuvre selon laquelle le fluide présent dans le milieu ne comporte qu'un seul composé chimique ou un composé chimique additionnel dont le spectre d'absorption est dissocié du spectre d'absorption du composé chimique d'intérêt, la mesure de l'absorbance en fonction de la longueur d'onde conduit directement au spectre d'absorption du composé chimique d'intérêt.

Selon une mise en œuvre selon laquelle le fluide présent dans le milieu comporte un ou des composés chimiques additionnels par rapport au composé chimique d'intérêt, dont les spectres d'absorption se superposent au moins en partie au spectre d'absorption du composé chimique d'intérêt et dont la concentration est connue et invariante dans le temps, on peut réaliser un prétraitement de la mesure de l'absorbance en fonction de la longueur d'onde tel que décrit ci-dessus afin d'obtenir le spectre d'absorption du composé chimique d'intérêt.

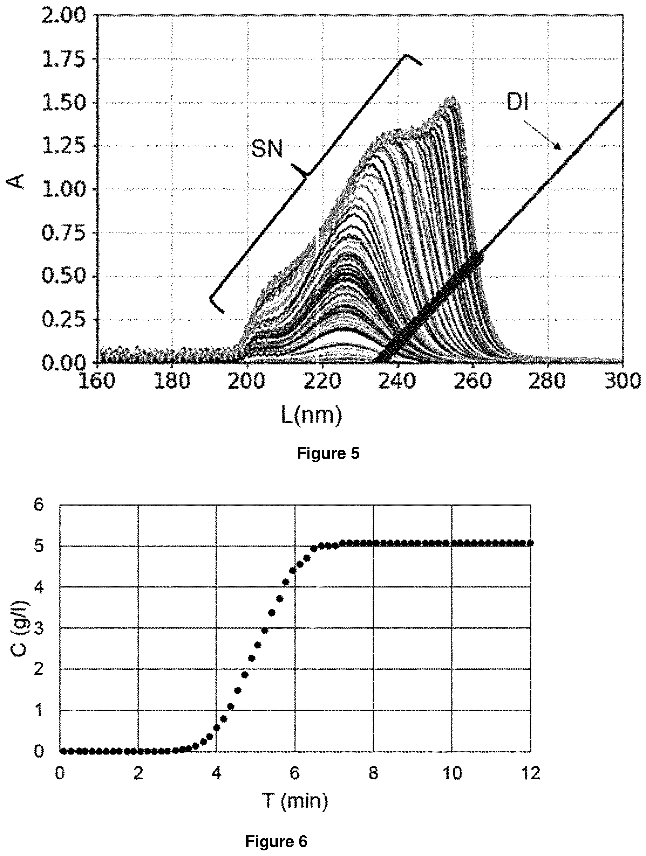

La figure 5 illustre une pluralité de spectres d'absorption SN mesurés au cours de l'étape 2.1), chaque spectre d'absorption correspondant à un pas de temps. La figure 5 présente en outre la superposition de la droite DI déterminée au cours de l'étape 1.2 et qui est utilisée dans l'étape 2.2) décrite ci-dessous.

Ainsi, à l'issue de cette étape, on obtient une pluralité de spectres d'absorption relatifs au composé chimique d'intérêt, chaque spectre d'absorption correspondant à un pas de temps de la succession de pas de temps.

### 2.2) Détermination de la concentration en le composé chimique pour chaque pas de temps

Au cours de cette étape, pour chacun des spectres d'absorption correspondant chacun à un pas de temps, on détermine une valeur d'absorbance à l'intersection entre la courbe définie à l'étape 1.2) et le spectre d'absorption considéré. Puis, au moyen du modèle de l'évolution de l'absorbance en fonction de la concentration et à partir de cette valeur d'absorbance, on déduit la concentration en le composé chimique d'intérêt pour le pas de temps considéré.

Autrement dit, au cours de cette étape, on recherche l'intersection entre la courbe définie à l'étape 1.2) et chaque spectre d'absorption mesuré à l'étape 2.1), et à partir de la valeur d'absorbance à cette intersection et au moyen du modèle déterminé à l'étape 1.3), on en déduit la concentration en le composé chimique pour ce pas de temps.

Cette étape peut être illustrée à l'aide de la figure 5 déjà décrite, qui présente la superposition sur l'ensemble des spectres d'absorption mesurés à l'étape 2.1) de la droite DI déterminée au cours de l'étape 1.2). Pour chaque spectre mesuré à un pas de temps donné, on détermine la valeur de l'absorbance à l'intersection de la droite DI et du spectre considéré, et au moyen du modèle M de la figure 4, on relève la valeur de la concentration correspondant à cette valeur d'absorbance. On obtient alors une valeur de concentration pour le pas de temps considéré. En répétant cette opération pour chaque spectre et donc pour chaque pas de temps, on obtient une courbe telle qu'illustrée sur la figure 6, qui présente l'évolution dans le temps T de la concentration C en le composé chimique d'intérêt.

Il est bien clair que les étapes 2.1) et 2.2) peuvent être mises en œuvre à la fin de chaque pas de temps, pour une détermination de la concentration en le composé chimique d'intérêt en temps réel.

Au moins une partie des étapes du procédé selon l'invention, notamment les étapes 1.2) et/ou 1.3) et/ou 2.2), peuvent être mises en œuvre au moyen d'un équipement (par exemple un poste de travail informatique, c'est-à-dire un ordinateur) comprenant des moyens de traitement des données (un processeur) et des moyens de stockage de données (une mémoire, en particulier un disque dur), ainsi qu'une interface d'entrée et de sortie pour saisir des données et restituer des résultats.

En outre, l'invention concerne un produit programme d'ordinateur téléchargeable depuis un réseau de communication et/ou enregistré sur un support lisible par ordinateur et/ou exécutable par un processeur, comprenant des instructions de code de programme pour la mise en œuvre au moins des étapes 1.2) et/ou 1.3) et/ou 2.2) du procédé tel que décrit ci-dessus, lorsque ledit programme est exécuté sur un ordinateur.

L'invention concerne en outre un système pour déterminer une évolution dans le temps d'une concentration en un composé chimique d'un fluide, le système comprenant une source lumineuse, un spectromètre, ainsi que des moyens pour le traitement et l'analyse de mesures réalisées par le spectromètre, le système étant destiné à la mise en œuvre du procédé tel que décrit ci-dessus.

## Exemples

Les caractéristiques et avantages du procédé selon l'invention apparaîtront plus clairement à la lecture des exemples d'application ci-après.

### Premier exemple

Ce premier exemple d'application s'inscrit dans le domaine des géosciences, et vise plus particulièrement à suivre l'évolution dans le temps d'une solution d'iodure de potassium (KI) pure dissoute dans de l'eau purifiée en sortie d'un milieu poreux. Le milieu poreux considéré est une roche de type grès de Bentheimer. L'échantillon de roche a un diamètre de 1 cm, une longueur de 2 cm, et une perméabilité de 3,4 Darcy. Cette expérience a pour objectif de caractériser la dispersion dans la roche. Le KI est utilisé ici comme un traceur passif (pas d'interaction chimique avec le milieu). Lors de cette expérience de dispersion, une solution de concentration $c_0$ connue (5 g/l) en KI est injectée à débit constant dans une roche initialement saturée avec un fluide de référence, correspondant à une solution de NaCl à 5 g/l. Ce fluide de référence a été choisi pour éviter d'utiliser une eau purifiée qui risque de déstabiliser les argiles présentes dans la roche. Cette solution a de plus l'avantage d'avoir un spectre d'absorption dissocié du spectre d'absorption du KI.

Le montage expérimental pour cette mise en œuvre du procédé selon l'invention est celui présenté en figure 2B. Ce montage expérimental comprend un système de mesure optique, formé par une source lumineuse SL, pour cet exemple émettant dans les UV (l'iodure de potassium absorbant dans cette gamme de longueur d'ondes) et un spectromètre SP pour mesurer une intensité lumineuse, pour cet exemple dans les UV. La cellule de mesure CE1 disposée en amont de l'échantillon permet de vérifier la stabilité de la solution injectée dans l'échantillon, alors que la cellule de mesure CE2 disposée en sortie de l'échantillon a pour but de doser les effluents en sortie du milieu. Les cellules de mesure CE1, CE2 sont reliées chacune à la source lumineuse SL et au spectromètre SP par des fibres optiques F de 400 $\mu$m de cœur. Le système de circulation de fluide comprend en outre un by-pass BP pour contourner l'échantillon de roche, contrôlé par une vanne V, afin de permettre la mise en œuvre de l'étape 1.1) décrite ci-dessus pour chaque cellule de mesure CE1, CE2 en même temps.

La mise en œuvre du procédé selon l'invention pour cet exemple d'application, au moyen du montage expérimental décrit ci-dessus, est la suivante :

- **Construction du modèle de l'évolution de l'absorbance en fonction de la** concentration : neuf solutions comprenant de l'iodure de potassium KI à des concentrations connues et couvrant la gamme de concentrations [0 ; 1,5*$c_0$] sont injectées une à une dans les cellules de mesure CE1, CE2, sans passer par le milieu poreux disposé dans le porte-échantillon PE, au moyen du by-pass BP. Dans ce cas, la concentration est la même dans les deux cellules de mesure CE1, CE2. Pour chacune des solutions et sur chaque cellule de mesure CE1, CE2, on mesure l'intensité transmise I. L'absorbance associée à la concentration en place est ensuite déduite à partir de I et de $I_0$ qui est l'intensité mesurée préalablement sur le fluide de référence (solution de NaCl à 5 g/l). Par exemple, on peut à cette fin, saturer le milieu poreux et les cellules de mesure CE1, CE2 avec le fluide de référence qui est ici la solution de NaCl à 5 g/l. L'intensité $I_0$ associée à cette solution peut être alors mesurée dans les deux cellules de mesure CE1, CE2. La figure 3, déjà décrite ci-dessus, présente les neuf spectres d'absorption S1, S9 mesurés pour chaque concentration, ainsi que la droite DI définie lors de l'application de l'étape 1.2) décrite ci-dessus, intersectant les spectres d'absorption S1, S9 en un seul point et de manière à ce qu'une seule valeur d'absorbance corresponde à une seule valeur de longueur d'onde et réciproquement. La figure 4 présente le modèle de l'évolution de l'absorbance A en fonction de la concentration C (en échelle logarithmique) déterminé par régression à partir des valeurs d'absorbance à l'intersection de la droite DI avec les spectres d'absorption S1, S9, ainsi que des concentrations associées à chaque spectre S1, S9.
- **Suivi de l'évolution de la concentration du traceur en sortie de la** roche : Au moyen du système de circulation de fluide du montage expérimental, une solution KI de concentration connue $c_0$ = 5 g/l est injectée en continu à débit constant (0,1 cc/min pour cet exemple) dans la roche. L'absorbance est alors déterminée en continu dans les deux cellules de mesures CE1, CE2, la mesure dans CE1 servant uniquement à la validation de la concentration en entrée de l'échantillon. La figure 5 déjà décrite ci-dessus présente les spectres d'absorption SN mesurés au niveau de la cellule de mesure CE2 en sortie du milieu poreux, ainsi que la droite DI déjà présentée en figure 3. La figure 6 illustre l'évolution au cours du temps T de la concentration C déterminée en sortie de l'échantillon, à l'issue de l'application de l'étape 2.2 du procédé selon l'invention. On peut observer que le fluide sortant de l'échantillon de roche et traversant la cellule de mesure aval CE2 voit sa concentration en KI (dans la gamme de longueurs d'onde d'intérêt) varier en raison de la dispersion dans la carotte et passer de 0 à $c_0$ qui est la concentration en KI du fluide injecté. A noter que dans cet exemple d'application, on utilise les mesures réalisées au niveau de la cellule de mesure amont CE1 pour vérifier que le fluide traversant la cellule amont CE1 a une concentration en KI constante (égale à $c_0$).

**Deuxième exemple**

Ce deuxième exemple d'application vise à comparer le procédé selon l'invention (plus précisément la première étape du procédé selon l'invention) à la méthode selon l'art antérieur basée sur la loi de Beer-Lambert décrite ci-dessus. Pour cet exemple, le milieu poreux et le montage expérimental sont identiques à l'exemple précédent.

Cette comparaison a été réalisée en considérant quinze solutions aqueuses comprenant uniquement du chlorure de sodium (NaCl) selon des concentrations connues et variant dans une gamme très large, de 0,005 à 200 g/l. Pour chacune des solutions et sur chaque cellule de mesure CE1, CE2, on mesure l'intensité transmise I. L'absorbance associée à la concentration en place est ensuite déduite à partir de I et de $I_0$ qui est l'intensité mesurée préalablement sur le fluide de référence, ici correspondant à l'eau utilisée pour préparer les solutions.

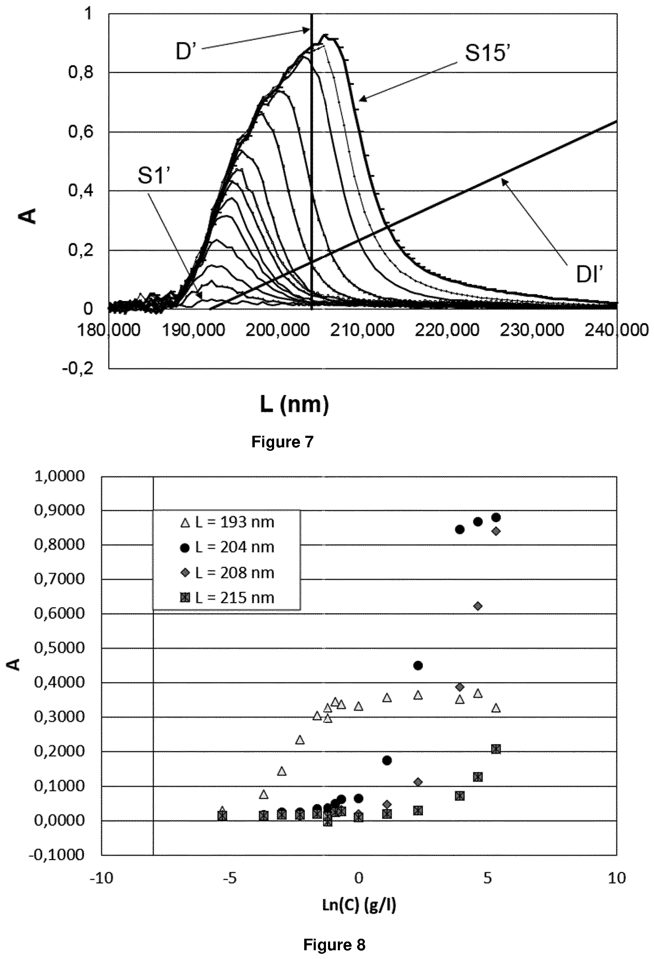

La figure 7 présente les 15 spectres d'absorption, c'est-à-dire l'absorbance A en fonction de la longueur d'onde L, obtenus pour ces différentes solutions. Le spectre S1' correspond à la concentration la plus basse, et le spectre S15' correspond à la concentration la plus élevée (les spectres d'absorption associés aux concentrations intermédiaires ne sont pas référencés, pour des raisons de clarté de la figure). On peut observer que lorsque la concentration augmente, l'absorbance augmente et le spectre d'absorption se décale vers la droite pour couvrir une gamme de longueur d'ondes plus importante. La figure 7 présente en outre une droite oblique DI' intersectant chacun des 15 spectres d'absorption S1', S15' et respectant les conditions définies à l'étape 1.2 du procédé selon l'invention.

Comme décrit ci-dessus, l'application de la méthode selon la loi de Beer Lambert consiste à relever les valeurs d'absorbance à l'intersection d'une droite verticale passant par le maximum des spectres d'absorption. A des fins d'illustration, on a relevé les valeurs d'absorbance à l'intersection entre l'ensemble des spectres d'absorption S1', S15' de concentrations connues et quatre droites verticales passant par les longueurs d'onde L=193 nm, L= 204 nm (la figure 7 illustre la droite verticale D' passant par la longueur d'onde L=204 nm), L= 208 nm, et L=215 nm. La figure 8 représente les valeurs d'absorbance A relevées pour les quatre droites verticales et représentées en fonction du logarithme de la concentration C associée à chaque spectre : L=193 nm (représentées par des triangles), L= 204 nm (représentées par des disques), L= 208 nm (représentées par des losanges), L=215 nm (représentées par des carrés). On peut ainsi observer que l'utilisation de la loi de Beer Lambert à une seule longueur d'onde ne permet pas de décrire toute la gamme de concentrations [0,005 ; 200] g/l. En effet, considérons par exemple les données d'absorbance mesurées :

- à L=193 nm, les résultats montrent qu'au-delà de 0,2 g/l on atteint un plateau d'absorbance quelle que soit la concentration ;
- à L=204 nm, l'absorbance reste quasi nulle (NaCl non détecté) pour toutes les concentrations inférieures à 0,3 g/l puis le signal est saturé à partir de 100 g/l. L'absorbance est non nulle seulement sur la gamme [0,3 ; 100] g/l. Or la concentration peut être déduite de la mesure d'absorbance via la loi de Beer Lambert seulement dans la gamme de linéarité de l'absorbance par rapport à la concentration.
- à L=208 nm et à L=215 nm, l'absorbance associée aux concentrations inférieures à respectivement 3 g/l et à 10 g/l sont nulles.

Ainsi quelle que soit la droite verticale considérée, il n'est pas possible de couvrir toute la gamme de concentrations de cet exemple d'application par la méthode selon l'art antérieur basée sur la loi de Beer-Lambert.

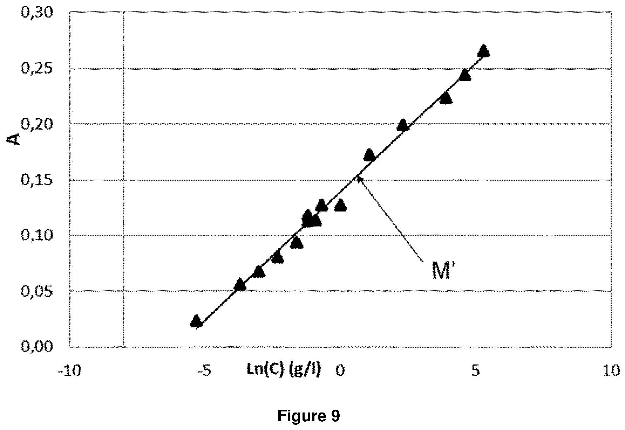

La figure 9 représente les valeurs d'absorbance A en fonction de la concentration C obtenues par l'application de l'étape 1.3 du procédé selon l'invention, le long de la courbe DI' intersectant les spectres d'absorption S1', S'15 présentée en figure 7. On peut observer que les valeurs d'absorbance relevées s'alignent le long d'une droite M' quelle que soit la concentration, ce qui permet de définir un modèle d'évolution de l'absorbance en fonction de la concentration valide pour une large gamme de concentrations, ici la gamme cible [0,005 ; 200] g/l. Ainsi, le procédé selon l'invention, en permettant l'utilisation d'une courbe autre qu'une droite verticale le long de laquelle l'absorbance est mesurée, permet d'exploiter une grande partie du spectre en considérant une large gamme de longueur d'ondes, ce qui permet d'élargir la gamme de concentration mesurable.

Ainsi, le procédé selon l'invention permet, grâce à une méthode simple et rapide, un suivi en temps réel de l'évolution de la concentration en un composé chimique dans un fluide, et ce dans une large gamme de concentrations. En effet, le procédé selon l'invention permet une mesure de la concentration en un composé chimique même lorsque le composé chimique est présent en forte concentration, notamment dans une concentration au-delà de laquelle la loi de Beer-Lambert ne peut plus être appliquée. De plus, le procédé selon l'invention permet, une fois le modèle de l'évolution de l'absorbance en fonction de la concentration construit déterminé, de déterminer la concentration en le composé chimique d'intérêt après chaque acquisition d'un spectre d'absorption, et ainsi de suivre en ligne l'évolution de la concentration en le composé chimique d'intérêt.

## Revendications

1. Procédé pour déterminer une évolution dans le temps d'une concentration (C) en un composé chimique d'un fluide (FL) en circulation dans une zone de mesure (ZM), au moyen au moins d'un système de mesure optique (SMO, SL, SP) pour mesurer une absorbance (A) en fonction d'une longueur d'onde (L), ledit composé chimique dudit fluide (FL) étant l'unique composé chimique dudit fluide (FL) ou l'unique composé chimique dudit fluide (FL) dont ladite concentration (C) varie ou l'unique composé chimique dudit fluide (FL) ayant une absorbance (A) non nulle dans une gamme de longueur d'ondes absorbées par ledit composé chimique, caractérisé en que :

A) on construit un modèle (M, M') de l'évolution de ladite absorbance (A) en fonction de ladite concentration (C) de la manière suivante :

i) au moyen dudit système de mesure optique (SMO, SL, SP), on mesure une absorbance (A) en fonction de la longueur d'onde (L) pour une pluralité d'échantillons dudit fluide (FL) ayant des concentrations en ledit composé chimique distinctes, et on obtient une première pluralité de spectres d'absorption (S1, S9, S1', S15') relatifs audit composé chimique correspondant chacun à une desdites concentrations en ledit composé chimique ;
ii) on définit une courbe (DI, DI') intersectant chacun desdits spectres d'absorption (S1, S9, S1', S15') de ladite première pluralité de spectres d'absorption en un seul point d'intersection et telle que ladite courbe (DI, DI') soit une fonction bijective de ladite absorbance (A) et de ladite longueur d'onde (L) ;
iii) on construit ledit modèle (M, M') de l'évolution de ladite absorbance (A) en fonction de ladite concentration (C) à partir de premières valeurs d'absorbance auxdits points d'intersection entre ladite courbe (DI, DI') et chacun desdits spectres d'absorption (S1, S9, S1', S15') de ladite première pluralité de spectres d'absorption, et de ladite concentration (C) correspondant à chacun desdits spectres d'absorption (S1, S9, S1', S15') de ladite première pluralité de spectres d'absorption ;

B) on détermine une évolution dans le temps d'une concentration (C) en ledit composé chimique dudit fluide (FL) circulant dans ladite zone de mesure (ZM) de la manière suivante :

iv) au moins au moyen dudit système de mesure optique (SMO, SL, SP), on mesure dans ladite zone de mesure (ZM) une absorbance (A) en fonction de la longueur d'onde (L) pour une succession de pas de temps et on obtient une deuxième pluralité de spectres d'absorption (SN) relatifs audit composé chimique correspondant chacun à un pas de temps ;
v) pour chacun desdits spectres d'absorption (SN) de ladite deuxième pluralité de spectres d'absorption (SN), on détermine une deuxième valeur d'absorbance à l'intersection entre ladite courbe (DI, DI') et ledit spectre d'absorption (SN), et, au moyen dudit modèle (M, M') de l'évolution de ladite absorbance (A) en fonction de ladite concentration (C) et à partir de ladite deuxième valeur d'absorbance, on déduit ladite concentration (C) en ledit composé chimique pour ledit pas de temps.

**2.** Procédé selon l'une des revendications précédentes, dans lequel ladite courbe (DI, DI') est une droite.

**3.** Procédé selon l'une des revendications précédentes, dans lequel on détermine le modèle (M, M') de l'évolution de l'absorbance (A) en fonction de la concentration (C) au moyen d'une méthode de régression.

**4.** Procédé selon l'une des revendications précédentes, dans lequel ledit système de mesure optique (SMO, SL, SP) comprend au moins une source lumineuse (SL) pour émettre un rayonnement dans au moins dans une gamme de longueur d'ondes prédéterminée, et un spectromètre (SP) pour mesurer une intensité lumineuse dudit rayonnement transmis au travers de ladite zone de mesure (ZM) au moins dans ladite gamme de longueur d'ondes prédéfinie.

**5.** Procédé selon l'une des revendications précédentes, dans lequel, lorsque ledit composé chimique est l'unique composé chimique dudit fluide (FL) dont ladite concentration (C) varie et en l'absence d'une étape de calibration dudit système de mesure optique (SMO, SL, SP) au moyen d'un fluide de référence correspondant audit fluide à l'exclusion dudit composé chimique, on applique une étape de prétraitement aux mesures d'absorbance (A) en fonction de la longueur d'onde (L) pour déterminer un spectre d'absorption dudit composé chimique, comprenant au moins une soustraction dudit spectre d'absorption dudit composé chimique additionnel préalablement enregistré.

**6.** Procédé selon l'une des revendications précédentes, dans lequel ladite zone de mesure (ZM) est disposée en aval d'un milieu poreux, tel qu'un échantillon d'une roche d'une formation souterraine, dans lequel circule ledit fluide (FL).

**7.** Procédé selon la revendication 6, dans lequel ledit composé chimique est choisi parmi la liste suivante : un tensio-actif, un sel, un composé hydrocarboné, un polymère.

**8.** Procédé selon l'une des revendications 6 à 7, dans lequel ledit procédé est mis en œuvre au moyen en outre d'un système de circulation de fluide (P, BP, V, PE) pour faire circuler ledit fluide au moins dans ledit milieu poreux et ladite zone de mesure, ledit système de circulation de fluide (P, BP, V, PE) comprenant une pompe (P), de préférence une pompe (P) apte à délivrer un débit avec une haute précision et une cellule porte échantillon (PE) dans laquelle est disposé ledit milieu poreux.

**9.** Système pour déterminer une évolution dans le temps d'une concentration en un composé chimique d'un fluide, ledit système comprenant une source lumineuse (SL), un spectromètre (SP), et des moyens pour le traitement et l'analyse de mesures réalisées par ledit spectromètre (SP), pour mettre en œuvre le procédé selon l'une des revendications précédentes.

**10.** Produit programme d'ordinateur téléchargeable depuis un réseau de communication et/ou enregistré sur un support lisible par ordinateur et/ou exécutable par un processeur, comprenant des instructions de code de programme pour la mise en œuvre des étapes ii), iii) et v) du procédé selon l'une des revendications 1 à 8, lorsque ledit programme est exécuté sur un ordinateur.

## Patentansprüche

**1.** Verfahren zur Bestimmung eines zeitlichen Verlaufs einer Konzentration (C) einer chemischen Verbindung eines in einem Messbereich (ZM) zirkulierenden Fluids (FL) mittels mindestens eines optischen Messsystems (SMO, SL, SP) zur Messung einer Extinktion (A) in Abhängigkeit von einer Wellenlänge (L), wobei die chemische Verbindung des Fluids (FL) die einzige chemische Verbindung des Fluids (FL) oder die einzige chemische Verbindung des Fluids (FL), deren Konzentration (C) sich ändert, oder die einzige chemische Verbindung des Fluids (FL) mit einer Extinktion (A) ungleich null in einem von der chemischen Verbindung absorbierten Wellenlängenbereich ist, **dadurch gekennzeichnet, dass**:

A) ein Modell (M, M') des Verlaufs der Extinktion (A) in Abhängigkeit von der Konzentration (C) auf die folgende Weise erstellt wird:

i) Messen, mittels des optischen Messsystems (SMO, SL, SP), einer Extinktion (A) in Abhängigkeit von der Wellenlänge (L) für eine Mehrzahl von Proben des Fluids (FL) mit verschiedenen Konzentrationen der chemischen Verbindung und Erhalten einer ersten Mehrzahl von Absorptionsspektren (S1, S9, S1', S15') bezüglich der chemischen Verbindung, die jeweils einer der Konzentrationen der chemischen Verbindung entsprechen;
ii) Definieren einer Kurve (DI, DI'), die jedes der Absorptionsspektren (S1, S9, S1', S15') der ersten Mehrzahl von Absorptionsspektren in einem einzigen Schnittpunkt schneidet, und derart, dass die Kurve (DI, DI') eine bijektive Funktion der Extinktion (A) und der Wellenlänge (L) ist;
iii) Erstellen des Modells (M, M') des Verlaufs der Extinktion (A) in Abhängigkeit von der Konzentration (C) ausgehend von ersten Extinktionswerten an den Schnittpunkten zwischen der Kurve (DI, DI') und jedem der Absorptionsspektren (S1, S9, S1', S15') der ersten Mehrzahl von Absorptionsspektren und von der Konzentration (C), die jedem der Absorptionsspektren (S1, S9, S1', S15') der ersten Mehrzahl von Absorptionsspektren entspricht;

B) der zeitliche Verlauf einer Konzentration (C) der chemischen Verbindung des in dem Messbereich (ZM) zirkulierenden Fluids (FL) auf die folgende Weise bestimmt wird:

iv) Messen, mindestens mittels des optischen Messsystems (SMO, SL, SP), in dem Messbereich (ZM) einer Extinktion (A) in Abhängigkeit von der Wellenlänge (L) für eine Folge von Zeitschritten und Erhalten einer zweiten Mehrzahl von Absorptionsspektren (SN) bezüglich der chemischen Verbindung, die jeweils einem Zeitschritt entsprechen;
v) Bestimmen, für jedes der Absorptionsspektren (SN) der zweiten Mehrzahl von Absorptionsspektren (SN), eines zweiten Extinktionswerts an dem Schnittpunkt zwischen der Kurve (DI, DI') und dem Absorptionsspektrum (SN) und Ableiten, mittels des Modells (M, M') des Verlaufs der Extinktion (A) in Abhängigkeit von der Konzentration (C) und ausgehend von dem zweiten Extinktionswert, der Konzentration (C) der chemischen Verbindung für den Zeitschritt.

**2.** Verfahren nach einem der vorhergehenden Ansprüche, wobei die Kurve (DI, DI') eine Gerade ist.

**3.** Verfahren nach einem der vorhergehenden Ansprüche, wobei das Modell (M, M') des Verlaufs der Extinktion (A) in Abhängigkeit von der Konzentration (C) mittels einer Regressionsmethode bestimmt wird.

**4.** Verfahren nach einem der vorhergehenden Ansprüche, wobei das optische Messsystem (SMO, SL, SP) mindestens eine Lichtquelle (SL) zum Aussenden einer Strahlung in mindestens einem vorbestimmten Wellenlängenbereich und ein Spektrometer (SP) zum Messen einer Lichtintensität der durch den Messbereich (ZM) hindurch transmittierten Strahlung mindestens in dem vordefinierten Wellenlängenbereich umfasst.

**5.** Verfahren nach einem der vorhergehenden Ansprüche, wobei, wenn die chemische Verbindung die einzige chemische Verbindung des Fluids (FL) ist, deren Konzentration (C) sich ändert, und ohne einen Schritt des Kalibrierens des optischen Messsystems (SMO, SL, SP) mittels eines Referenzfluids, das mit Ausnahme der chemischen Verbindung dem Fluid entspricht, ein Schritt des Vorverarbeitens für die Messungen der Extinktion (A) in Abhängigkeit von der Wellenlänge (L) angewandt wird, um ein Absorptionsspektrum der chemischen Verbindung zu bestimmen, der mindestens eine Subtraktion des zuvor aufgezeichneten Absorptionsspektrums der zusätzlichen chemischen Verbindung umfasst.

**6.** Verfahren nach einem der vorhergehenden Ansprüche, wobei der Messbereich (ZM) stromab eines porösen Mediums, wie einer Probe eines Gesteins einer unterirdischen Formation, angeordnet ist, in dem das Fluid (FL) zirkuliert.

**7.** Verfahren nach Anspruch 6, wobei die chemische Verbindung aus der folgenden Liste ausgewählt ist: ein Tensid, ein Salz, eine Kohlenwasserstoffverbindung, ein Polymer.

**8.** Verfahren nach einem der Ansprüche 6 bis 7, wobei das Verfahren ferner mittels eines Fluidzirkulationssystems (P, BP, V, PE) durchgeführt wird, um das Fluid mindestens in dem porösen Medium und dem Messbereich zirkulieren zu lassen, wobei das Fluidzirkulationssystem (P, BP, V, PE) eine Pumpe (P), bevorzugt eine Pumpe (P), die zum Fördern eines Volumenstroms mit einer hohen Präzision fähig ist, und eine Probenhalterzelle (PE), in der das poröse Medium angeordnet ist, umfasst.

**9.** System zur Bestimmung eines zeitlichen Verlaufs einer Konzentration einer chemischen Verbindung eines Fluids, wobei das System eine Lichtquelle (SL), ein Spektrometer (SP) und Mittel zur Verarbeitung und Analyse von mit dem Spektrometer (SP) ausgeführten Messungen zur Durchführung des Verfahrens nach einem der vorhergehenden Ansprüche umfasst.

**10.** Computerprogrammprodukt, das aus einem Kommunikationsnetzwerk heruntergeladen werden kann und/oder auf einem computerlesbaren Medium aufgezeichnet ist und/oder durch einen Prozessor ausführbar ist und das Programmcodeanweisungen umfasst, die bei der Ausführung des Programms auf einem Computer die Schritte ii), iii) und v) des Verfahrens nach einem der Ansprüche 1 bis 8 durchführen.

## Claims

**1.** Method for determining a change over time in a concentration (C) of a chemical compound in a fluid (FL) flowing through a measuring zone (ZM), by means at least of an optical measuring system (SMO, SL, SP) for measuring an absorbance (A) as a function of a wavelength (L), said chemical compound in said fluid (FL) being the only chemical compound in said fluid (FL) or the only chemical compound in said fluid (FL) the concentration (C) of which varies or the only chemical compound in said fluid (FL) having a non-zero absorbance (A) in a range of wavelengths absorbed by said chemical compound, **characterized in that**:

A) a model (M, M') of the change in said absorbance (A) as a function of said concentration (C) is constructed as follows:

i) by means of said optical measuring system (SMO, SL, SP), an absorbance (A) as a function of wavelength (L) is measured for a plurality of samples of said fluid (FL) having different concentrations of said chemical compound, and a first plurality of absorption spectra (S1, S9, S1', S15') relating to said chemical compound and each corresponding to one of said concentrations of said chemical compound are obtained;
ii) a curve (DI, DI') is defined that intersects each of said absorption spectra (S1, S9, S1', S15') of said first plurality of absorption spectra at a single point of intersection and that is such that said curve (DI, DI') is a bijective function of said absorbance (A) and of said wavelength (L);
iii) said model (M, M') of the change in said absorbance (A) as a function of said concentration (C) is constructed based on first absorbance values at said points of intersection between said curve (DI, DI') and each of said absorption spectra (S1, S9, S1', S15') of said first plurality of absorption spectra, and on said concentration (C) corresponding to each of said absorption spectra (S1, S9, S1', S15') of said first plurality of absorption spectra;

B) a change over time in a concentration (C) of said chemical compound in said fluid (FL) flowing through said measuring zone (ZM) is determined as follows:

iv) at least by means of said optical measuring system (SMO, SL, SP), an absorbance (A) as a function of wavelength (L) is measured in said measuring zone (ZM) for a succession of time increments, and a second plurality of absorption spectra (SN) relating to said chemical compound and each corresponding to one time increment are obtained;
v) for each of said absorption spectra (SN) of said second plurality of absorption spectra (SN), a second absorbance value is determined at the intersection between said curve (DI, DI') and said absorption spectrum (SN), and, by means of said model (M, M') of the change in said absorbance (A) as a function of said concentration (C) and based on said second absorbance value, said concentration (C) of said chemical compound is deduced for said time increment.

**2.** Method according to one of the preceding claims, wherein said curve (DI, DI') is a straight line.

**3.** Method according to one of the preceding claims, wherein the model (M, M') of the change in the absorbance (A) as a function of the concentration (C) is determined by means of a regression method.

**4.** Method according to one of the preceding claims, wherein said optical measuring system (SMO, SL, SP) comprises at least one light source (SL) for emitting radiation in at least one predetermined wavelength range, and a spectrometer (SP) for measuring a light intensity of said radiation transmitted through said measuring zone (ZM) at least in said predefined wavelength range.

**5.** Method according to one of the preceding claims, wherein, when said chemical compound is the only chemical compound in said fluid (FL) the concentration (C) of which varies and in the absence of a step of calibrating said optical measuring system (SMO, SL, SP) by means of a reference fluid corresponding to said fluid excluding said chemical compound, a preprocessing step is applied to the absorbance measurements (A) as a function of wavelength (L) to determine an absorption spectrum of said chemical compound, comprising at least one subtraction of said absorption spectrum of said additional chemical compound recorded beforehand.

**6.** Method according to one of the preceding claims, wherein said measuring zone (ZM) is placed downstream of a porous medium, such as a rock sample from an underground formation, through which said fluid (FL) flows.

**7.** Method according to Claim 6, wherein said chemical compound is selected from the following list: a surfactant, a salt, a hydrocarbon compound, a polymer.

**8.** Method according to one of Claims 6 and 7, wherein said method is implemented by means furthermore of a system (P, BP, V, PE) for making fluid flow, which is used to make said fluid flow at least through said porous medium and said measuring zone, said system (P, BP, V, PE) for making fluid flow comprising a pump (P), preferably a pump (P) capable of delivering a flow rate with a high precision, and a sample-holding cell (PE) in which said porous medium is placed.

**9.** System for determining a change over time in a concentration of a chemical compound in a fluid, said system comprising a light source (SL), a spectrometer (SP), and means for processing and analysing measurements made by said spectrometer (SP), for implementing the method according to one of the preceding claims.

**10.** Computer program product downloadable from a communication network and/or recorded on a medium that is readable by computer and/or executable by a processor, comprising program code instructions for implementing steps ii), iii) and v) of the method according to one of Claims 1 to 8, when said program is executed on a computer.

ZM
FL
RE
RT
d
SL
SP
SMO

Figure 1

SL
F
P
PE
CE
C
SP

Figure 2A

SL
F
P
CE1
V
PE
CE2
C
BP
SP

Figure 2B

SL
F
CE3
FL
CL
d
C
SP

Figure 2C

1.75
1.50
1.25
A 1.00
0.75
0.50
0.25
0.00
160
180
200
220
240
260
280
300
L (nm)
S1
S9
DI

Figure 3

0,8
0,7
0,6
0,5
A
0,4
0,3
0,2
0,1
-6
-4
-2
0
2
4
Ln(C) (g/l)
M

Figure 4

2.00
1.75
1.50
1.25
1.00
0.75
0.50
0.25
0.00
A
SN
DI
160
180
200
220
240
260
280
300
L(nm)

Figure 5

6
5
4
3
2
1
0
C (g/l)
0
2
4
6
8
10
12
T (min)

Figure 6

1
0,8
0,6
0,4
0,2
0
-0,2
A
D'
S15'
S1'
DI'
180,000
190,000
200,000
210,000
220,000
230,000
240,000
L (nm)


Figure 7

1,0000
0,9000
0,8000
0,7000
0,6000
0,5000
0,4000
0,3000
0,2000
0,1000
0,0000
-0,1000
A
L = 193 nm
L = 204 nm
L = 208 nm
L = 215 nm
-10
-5
0
5
10
Ln(C) (g/l)


Figure 8

0,30
0,25
0,20
A
0,15
0,10
0,05
0,00
-10
-5
Ln(C) (g/l)
0
5
10
M'

Figure 9

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- DE 102020002256 A1
- WO 2021026284 A1
- FR 2705459 A1
- US 2019017872 A1
- EP 2657681 A1
- EP 3139151 A1
- US 2001006819 A1


### Littérature non-brevet citée dans la description


- **MALIK, M** ; **CHAN, K. H.** ; **AZIMI, G**. Quantification of nickel, cobalt, and manganese concentration using ultraviolet-visible spectroscopy. *RSC Advances*, 2021, vol. 11 (45), 28014-28028
- Two schemes for trace detection using cavity ringdown spectroscopy. **MORVILLE J et al.** APPLIED PHYSICS B. SPRINGER BERLIN HEIDELBERG, 01 February 2004, vol. 78, 465-476